# EUROPEAN PATENT APPLICATION

(11) **EP 1 967 922 A2**
(43) Date of publication of application: **10.09.2008**
(21) Application number: 08250765.8
(22) Date of filing: 06.03.2008
(51) Int. Cl.: G05B 19/042, G05B 23/02, H04L 12/28

(54) **System and method for reporting and controlling the operation of a premise**

(30) Priority: 07.03.2007 US 683327
(71) Applicant: Optimal Innovations Inc, Bridgetown (BB)
(72) Inventor: Schoettle, Roland, Freeport Grand Bahama Island (BS)
(74) Representative: Jackson, Richard Eric

(57) **Abstract**

A plurality of devices are interconnected via a utility and distributed throughout a premises with each device operable for being temporarily configured to provide a service as well as information desired by a user. In one embodiment, the service is selected from the list of: light switch, power outlet, thermostat and the information is selected from the list of: environmental condition, power consumption, power grid conditions, Internet access, announcements. If desired, one or more devices can be configured from time to time in anticipation of the user's needs at that time.

## Description

### CROSS-REFERENCE TO RELATED APPLICATIONS

The present application is related to concurrently filed, co-pending, and commonly assigned U.S. Patent Application No. 11/683,304, filed March 7, 2007, entitled "SYSTEMS AND METHODS FOR LINKING UTILITY CONTROL DEVICES"; U.S. Patent Application No. 11/683,298, filed March 7, 2007, entitled "LIGHT SWITCH USED AS A COMMUNICATION DEVICE"; U.S. Patent Application No. 11/683,308, filed March 7, 2007, entitled "SYSTEM AND METHOD FOR PREMISES MONITORING USING WEIGHT DETECTION"; U.S. Patent Application No. 11/683,326, filed March 7, 2007, entitled "ANTICIPATORY UTILITY CONTROL DEVICE"; and U.S. Patent Application No. 11/683,335, filed March 7, 2007, entitled "PLUG AND PLAY UTILITY CONTROL MODULES", and U.S. Patent Application No. 11/683,354, filed March 7, 2007, entitled "SYSTEM AND METHOD FOR SUBSTITUTING DATA IN RESPONSES TO MULTIMEDIA INQUIRIES", the disclosures of which are hereby incorporated herein by reference.

### TECHNICAL FIELD

This invention relates to infrastructure reporting and more particularly to systems and methods for reporting and controlling the operation of a premise from multiple points within the premise.

### BACKGROUND OF THE INVENTION

If a home owner or infrastructure dweller were to try at any point in time to monitor the power usage, or any other operating parameter (such as the average temperature, the power usage, the occupancy pattern, the light levels, the highest or lowest temperature a room, or the refrigerator, achieved during the preceding 12 hours) that information would be difficult or impossible, to generate without sophisticated equipment. Certainly, systems could be established to provide that information along with any other information that a user would desire. However, such system would most likely require a multitude of disparate sensors, a sophisticated database to store sensor data, and be computer based accessed from a particular location, or at least from a computer wirelessly connected to a hub. The user would then have to access the computer to obtain the desired information.

In most situations, such computer access is impractical, either because of the time required, the lack of expertise in computer usage, or the lack of a computer at the time or place where the information is desired.

Take the simple task of obtaining a weather forecast. One must access a radio or TV station (which may not be convenient at the time the information is desired) or one could position one or more thermometers (electronic or otherwise) outside the premises and then the resident would read the thermometer to obtain the temperature. Regardless of how the resident (or other building user) decided to obtain the information, the resident would have to go to the location of the readout device, be it a TV screen, a radio or a thermometer. Now if the user desires to obtain another data point, such as the traffic conditions on the way to work or to school the resident would have to go to still another location (unless a computer was being used). When the necessary data is not publicly available (e.g., the temperature, power consumption or light level in a region of the building not otherwise monitored, say for example, the garage or back-bedroom), the user first must install various sensors to gather the data and install individual local display devices to view the data. In the event the user wants to view this data from a centralized location, networks must be installed to each of the sensors. If the user wishes to view historic data or otherwise compare (trend) historic data vs. present data, the data must be further organized into databases.

The focal point of the above discussion is centered around a typical home environment. But the problems discussed are not limited to homes but extend to any infrastructure, such as, by way of example, business locations, hotels, schools, shops, etc. For example, a person checks into a hotel and desires a late night snack. Typically, the person must call the front desk to obtain such information. This is sometimes inconvenient and often non-productive. In any case, existing systems are not capable of tailoring the response to a particular user's preferences.

### BRIEF SUMMARY OF THE INVENTION

A plurality of devices are interconnected via a utility and distributed throughout a premises with each device operable for being temporarily configured to provide a service as well as information desired by a user. In one embodiment, the service is selected from the utility list of: light switch, power outlet, thermostat while the information is selected from the list of: environmental condition, power consumption, power grid conditions, security condition, telephony, building automation conditions, Internet access, announcements, and advertising. If desired, one or more devices can be configured from time to time in anticipation of the user's needs at that time. Further, one or more devices can be configured to act in anticipation of the user and user type. For example, a user with a unique electronic ID such as car key fob, house key, ID bracelet, or cell phone could have light switches, power outlets, thermostats respond to them with unique user interface displays/menus and customized services. In one embodiment, the user interface is tailored to the particular user.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:

FIGURES 1A through 1D illustrate embodiments of a device in accordance with the inventive concepts hereof;

FIGURE 2 shows one embodiment of a control circuit for enabling the device of FIGURES 1A through 1D; and

FIGURE 3 shows one embodiment of a flow chart illustrating operations of the device shown in FIGURES 1A through 1D.

### DETAILED DESCRIPTION OF THE INVENTION

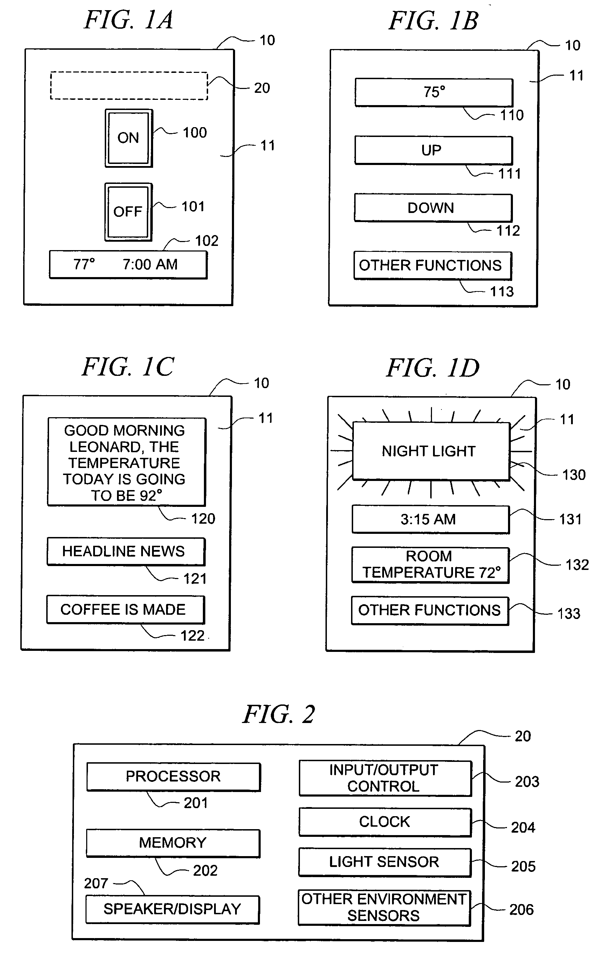

FIGURES 1A through 1D illustrate embodiments of a device in accordance with the inventive concepts hereof.

FIGURE 1A illustrates device 10 wherein screen 11 is configured as a conventional light power switch having on button 100 and off button 101. A user then can, by touching on button 100 turn a light, or other electrical device, on. Likewise, touching off button 101 will turn the electrical device off. If desired, screen 11 can also be configured with temperature and time display 102. As will be discussed hereinafter, device 10 is controlled by a controller, such as controller 20, which can be internal to device 10 or external thereto, or a combination of each.

Screen 11 can be a touch sensitive screen designed in the well-known manner such that different keys' functions can be displayed from time to time in anticipation of a user's needs at that time. For example, during the day, as determined either from clock 204 (FIGURE 2) or from other environmental sensors 206 (such as a light sensor) there would be little need for the On/Off light buttons to be displayed so device 10 could, for example, become configured as shown in FIGURE 1B, to display (or say) the temperature, via display 110 (or use a speaker, not shown). Along with the temperature display, up/down buttons 111,112 respectively, can be conveyed to allow a user to change the temperature settings on a premise's air conditioner or furnace. Button 113 could be displayed to allow the user to have displayed any number of function buttons or display screens. Another example, is to answer the telephone or to view who is at the front door in the event the user is closer to an enabled light-switch than to the telephone handset or front door. Yet another example is to display useful messages, such as the closest exit or whether the building is under security alerts or in a utility demand-response request cycle. In any event, any of these examples could also be customized to respond to any user uniquely, with the likelihood that the appropriate display would be for the closest user.

FIGURE 1C shows one example of display screen 120 which is configured to provide messages, perhaps from the Internet or from one or more sensors, such as sensors 206, FIGURE 2. These sensors could be internal to the device or could be remote therefrom or a combination thereof. Display 121 could, for example, display headline news from a favorite TV or radio station and display 122 could confirm that a desired function has been performed. The list of such functions and displays is endless and could include both premises related functions, such as the lawn needs to be watered, the furnace filters should be changed, to remote functions, such as your office (school, etc.) opening will be delayed today due to icy roads.

FIGURE 1D illustrates another anticipated set of displays where device 10, say at midnight, (or anytime after ten when the bedroom lights have been off for more than an hour) is arranged such that night light 130 is formed together with clock 131 and temperature display 132. If the user desires other functions, then button 133 is touched. Note that device 10 in FIGURE 1D need not be the same device that is used to turn the lights on/off in the bedroom. Also note that more than one device can be configured based on anticipation. Thus, a series of utility power devices, such as switches, plugs, telephone outlets, thermostats, etc., can be arranged using the concepts discussed herein. In such a situation, for example, each such utility device along a path to a child's bedroom, could become a night light, or a noise sensor or crying alarm, as desired based upon the programmed or anticipated requirements of the user(s). Another example is where each utility device along a path to a door or ground-floor window, could become a safety guidance system, each one beeping/squealing and flashing brightly at a faster rate so as to guide a trapped person to the safest exit. The same system could also use its sensors to measure and verify the existence of a trapped user so that other devices in nearby locations can alert others to the danger and to the trapped person.

FIGURE 2 shows one embodiment of a control circuit, such as control circuit 20, for enabling device 10, or other similar devices, of FIGURES 1A through 1D. Processor 201 can be local to controller 20 or could be, for example, a PC located remotely from one or more of devices 10 and communicating therewith via input/output control 203. Not shown is the interconnection between devices. This interconnection can be, for example, wireless, wireline, utility line or any combination thereof. The interconnection could include an Internet connection for communication with locations and devices either within the premises or remote therefrom. Memory 202 could store the various screen configurations and/or other data pertinent to each device 10. Clock 204 would keep the time, if desired and sensors 205, 206 would provide input from either sensors within device 10 or remote therefrom. Input/output control can, for example, be connected to other device 10s and/or to networks such as LAN or the Internet. One or more of these connections can be wireless and/or signals communicated over one or more of the premises utility lines. Speaker/display 207 can be used to deliver audible and/or visible messages or alarm signals to occupants of a room or of the entire premises.

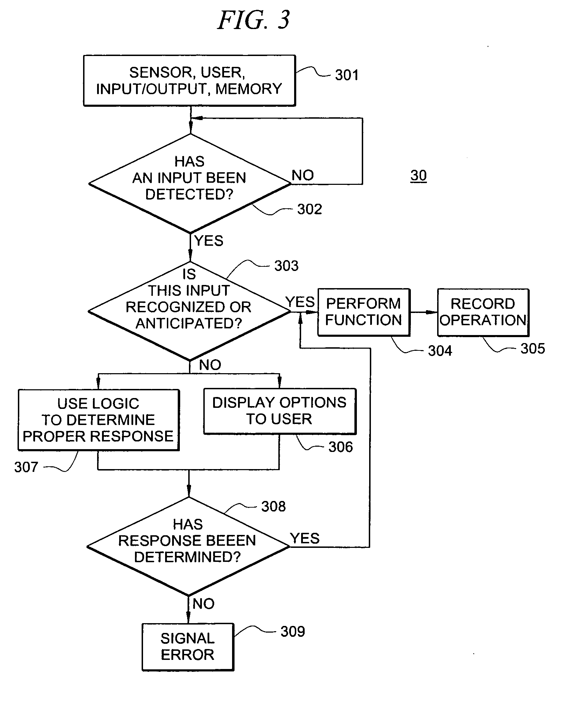

FIGURE 3 shows one embodiment of a flow chart, such as flow chart 30, illustrating operations of the device shown in FIGURES 1A through 1D. Process 301 monitors the sensors, users, input/output control, the memory, and any other desired stimuli and process 302 determines if an input has been detected. Note that under some situations, the monitored parameters may be remote from a particular device and even remote from the premises. An example of a stimuli remote from the device would be a fire in a lobby of a hotel. In such a case, an audible message can be delivered to the occupants via speaker/display 207. An example of a stimuli remote from the premises could be an explosion (or flood, or fire, etc.) in the neighborhood, or it could be a civil defense alert or perhaps even an amber alert for a missing child.

Process 303 then determines if this is an anticipated stimuli. For example, if it is nighttime and motion is detected in the bedroom, (but nowhere else in the house) the system can assume that one of the occupants is moving about and turns on one or more of the night lights or if preferred, one or more of the main lights, 130, FIGURE 1D. A recognized stimuli would be the sensing of motion in the vicinity of the user, the sensing of loud noises, or the user touching a button on a display. When the stimuli is one that is recognized or anticipated, process 304 performs the proper function (which can be to reconfigure the display or to turn on a light, etc.) and, if desired the performed function can be recorded in memory via process 305.

In situations, where the stimuli is neither anticipated nor recognized, or where some ambiguity remains, or in situations were the response would be proper but the time is wrong (turning on the bedroom light at 2AM) the system can both display additional options to the user, via process 306 or the system can use (internal or remote) logic to determine the proper response. For example, movement is detected not only in the master bedroom but several temperature (or smoke) sensors are now beginning toward a warning condition. Because of the combination of events which are occurring at different locations, the system could decide (depending upon prior programming) to sound or display, via process 308, either a local or a remote (or both) alarm condition. The display, then could visually provide the current location of the first emergency responders and could open a communication path directly to a dispatcher, thereby avoiding the necessity of using a separate telephone. Another example, movement is detected when/where none is expected. The system takes a picture of the perpetrator which is then immediately forwarded to police and/or rescue workers.

In some situations the stimuli will remain vague and this then is reported to the user, either immediately or via a message at a later time.

As discussed herein, the utility devices can be stand-alone or, most likely, used in tandem to form a premises monitoring control, and reporting system that will not only allow a user to control electrical or other apparatus, but to provide and obtain and display information locally and remotely without requiring a number of specialized devices to perform all the desired functions.

Note that the message and operational linking need not be contained within one building or within a neighborhood or even within geographical area, but could extend over long distances. For example, a user could link his/her home in Calgary with a parent's home in California for medical monitoring or security purposes (or any other purpose). If mom were to fall down in her bedroom, the light switches and wall plugs in all of the users homes (e.g., in Calgary and a beach house in XXXX) would light up to indicate that mom is in trouble. If her heart rate and blood pressure were to be dangerously erratic, the system would also call, for example, her neighbor, the hospital, 911, etc. In all cases, the user could see her problem from the user's light switch message display and immediately be able to push a button on any light switch to speak to mom over the Internet to the corresponding light switch in the room mom is in. If mom does not answer, then the user could push a button to send a message to her system so that her system calls locally for help. The system of tagging would run down an "alert priority" list so that it would call a cell phone in the event the user is not home and then progresses down the call list. Emergency services often use the originating number to cross reference the caller's location and thus the system would need to default to making local calls from mom's home.

Examples of services controllable from a device are: light switch, power outlet, thermostat, touch screen, appliance, communications device, keypad, access card, security card, credit card, scanner, RFID, telephone, microphone, VoIP, speaker, television, remote control, doorbell.

Examples of information displayable at a device are: environmental condition, power consumption, power grid conditions, Internet access; date and time, seasons, announcements; the real-time price of power, status of the security system, occupancy, CO and CO₂, equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for the commute home, accidents, pollen index, allergy alerts, homeland security, biohazard warnings, the upcoming weather, indicators as to equipment health, score of the game, alerts for local merchant specials, real-time asset management/maintenance (e.g., failed bulbs, performance of real and virtual zones, uptime, time between failure, availability).

Examples of anticipated user needs are: time, sensor inputs, user defined rules, system interactions of inputs and outputs, previous action patterns of a device user, instructions provided external to said device.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A premises control system comprising:
a plurality of devices adapted for interconnection via a utility distributed throughout said premises;
means in each said device for temporarily configuring said device to provide a service as well as information desired by a user, said service selected from the list of: light switch, power outlet, thermostat, touch screen, appliance, communications device, keypad, access card, security card, credit card, scanner, RFID, telephone, microphone, VoIP, speaker, television, remote control, doorbell, and said information selected from the list of: environmental condition, power consumption, power grid conditions, Internet access; time of day, season; announcements; the real-time price of power, status of the security system, occupancy, CO and CO₂, equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for the commute home, accidents, pollen index, allergy alerts, homeland security, biohazard warnings, the upcoming weather, indicators as to equipment health, score of the game, alerts for local merchant specials, real-time asset management/maintenance; and
means responsive to a sensed premises condition with respect to a particular device for configuring said device.

2. The control system of claim 1 wherein said device comprises an interface for accepting input from a user.

3. The control system of claim 1 wherein said device comprises an interface for conveying messages.

4. The control system of claim 3 wherein said interface comprises at least one touch responsive portion.

5. The control system of claim 1 wherein at least one of said devices comprises:
means for anticipating the conditions with respect to said particular device.

6. The control system of claim 5 wherein said anticipating means is selected from the list of: time, sensor inputs, user defined rules, system interactions of inputs and outputs, previous action patterns of a device user, instructions provided external to said device.

7. The control system of claim 1 further comprising:
means for accepting information from sources external to said premises, and
wherein said externally provided instructions are provided by accepted ones of said information.

8. A utility control device comprising:
terminals for connecting to at least one utility of a premises;
a processor for configuring said device to perform at least one set of operations; and
an interface for presenting to a user any said configuration pertaining to operations currently available to be performed by said device.

9. The device of claim 8 wherein said operations are selected from the list of:
light switch, power outlet, thermostat, touch screen, appliance, communications device, keypad, access card, security card, credit card, scanner, RFID, telephone, microphone (voice), VoIP, speaker (audio out), television, remote control, doorbell.

10. The device of claim 9 wherein said processor is further operable for configuring said device to provide information interfaces wherein said information is selected from the list of: environmental condition, power consumption, power grid conditions, Internet access, announcements, the real-time price of power, status of the security system, occupancy, CO and CO₂ equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for the commute home, accidents, pollen index, allergy alerts, homeland security, biohazard warnings, the upcoming weather, indicators as to equipment health, score of the game, alerts for local merchant specials, real-time asset management/maintenance.

11. The device of claim 10 wherein said interface accepts input from a user.

12. The device of claim 10 wherein said interface includes at least one touch responsive portion.

13. The device of claim 8 further comprising:
a receiver for accepting information from a location external to said device; and
wherein an externally provided instruction is used by said processor to configure said device.

14. The device of claim 8 further comprising:
a communication path for receiving information from a device in a remote location, said received information pertaining to events occurring at said remote location.

15. The device of claim 14 wherein said interface is operable for accepting commands from a user, said commands for communication via said communication path of said remote location.

16. A method for controlling information flow to a premises user, said method comprising:
monitoring various parameters on a continuous basis; and
from time to time changing a user presentation on a utility control device to reflect a current state of a control device dependant upon said monitored premises parameters, said control device being primarily available to said user to control a specific piece of premises equipment.

17. The method of claim 16 wherein said parameters are selected from the list of: light, sound, temperature, smoke, alerts environmental condition, power consumption, power grid conditions, Internet access, announcements, the real-time price of power, status of the security system, occupancy, CO and CO₂, equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for a commute, accidents, pollen index, allergy alerts, homeland security, biohazard warnings, upcoming weather, indicators as to equipment health, score of the game, alerts for local merchant specials, real-time asset management/maintenance.

18. The method of claim 16 wherein said user presentation is selected from the list of: utility operational buttons, displays, audible messages, lights, RF messages, digital and analog messages.

19. The method of claim 16 wherein said specific piece of premises equipment is selected from the list of: light switch, power outlet, phone jack, Internet connection, cable connection, thermostat, touch screen, appliance, communications device, keypad, access card, security card, credit card, scanner, RFID, telephone, microphone (voice), VoIP, speaker (audio out), television, remote control, doorbell.

20. The method of claim 16 further comprising:
anticipating by said utility control device a need for a particular presentation.
